Europäisches Patentamt

European Patent Office

Office européen des brevets

(11) Veröffentlichungsnummer: **0 279 046**
**A2**

(12) # EUROPÄISCHE PATENTANMELDUNG

(21) Anmeldenummer: **87118102.0**

(51) Int. Cl.⁴: **E04G 17/06 , F16B 43/00**

(22) Anmeldetag: **08.12.87**

(30) Priorität: **14.02.87 DE 3704646**

(43) Veröffentlichungstag der Anmeldung:
**24.08.88 Patentblatt 88/34**

(84) Benannte Vertragsstaaten:
**AT BE DE ES FR GB IT NL SE**

(71) Anmelder: **Hünnebeck GmbH**
**Am Zechenplatz**
**D-4030 Ratingen 4 - Lintorf(DE)**

(72) Erfinder: **Hagemes, Klaus**
**Rheinstrasse 176d**
**D-4060 Viersen 12(DE)**
Erfinder: **Schliephacke, Heinrich, Dipl.-Ing.**
**Württembergstrasse 18**
**D-4030 Ratingen 6-Hösel(DE)**

(74) Vertreter: **Türk, Gille, Hrabal**
**Bruckner Strasse 20**
**D-4000 Düsseldorf 13(DE)**

(54) **Ankermutter für Schalungsanker.**

(57) Es ist eine Ankermutter für Schalungsanker von Betonschalungen offenbart, die eine auf den Schalungsanker aufsteckbare Ankerplatte und eine auf den Schalungsanker aufschraubbare Mutter, die relativ zur Ankerplatte verdrehbar ist, aufweist. Zwischen Ankerplatte und Mutter ist eine druckund gleitfähige Zwischenlage vorgesehen um ein leichtes Lösen der Mutter auch dann zu gewährleisten, wenn die Ankermutter unter hoher Druckspannung steht.

Fig. 1

EP 0 279 046 A2

## Ankermutter für Schalungsanker

Die Erfindung betrifft eine Ankermutter für Schalungsanker von Betonschalungen, die eine auf den Schalungsanker aufsteckbare Ankerplatte und eine auf den Schalungsanker aufschraubbare Mutter , welche relativ zur Ankerplatte verdrehbar ist, aufweist.

Beim Betonieren senkrechter Wände und vergleichbarer Objekte werden die beiden sich gegenüber stehenden Schalungswände durch Verankerungen wie Schalungsanker miteinander verbunden, damit sie unter Einwirkung des Druckes des eingegossenen Betons sich nicht auseinanderbewegen können. Die Verankerungen bzw.Schalungsanker bestehen im allgemeinen auch hochwertigen Stählen mit Gewinde, auf deren beide Enden sogenannte Ankerplatten aufgesteckt und Muttern aufgeschraubt werden, gegen die sich die betreffende Schalungswand unter dem Druck des eingegossenen Betons abstützt. Durch fortschreitende Technik sowohl bezüglich der Schalungen als auch der Betoniergeschwindigkeit werden die Betondrücke immer höher, so daß die Schalungsanker immer größere Kräfte aufnehmen müssen. Beispielsweise beträgt bei den heute üblichen und weit verbreiteten Schalungsankern die maximal zulässige Ankerlast ca. 90 kN.

Beim Ausschalen müssen zuerst die Ankermuttern gelöst werden, was bei den hohen auf die Schalungsanker einwirkenden Kräften zu Schwierigkeiten führt. Die Reibung zwischen Ankerplatte und der loszudrehenden Mutter ist so groß , daß die Muttern nur mit größter Gewalt und erheblichem Zeitaufwand losgedreht werden können. Dabei treten sehr leicht Beschädigungen an den aufeinander reibenden Flächen von Ankerplatte und Mutter auf, so daß die Ankermuttern schon nach relativ wenigen Einsätzen kaum noch oder gar nicht mehr brauchbar sind.

Der Erfindung liegt die Aufgabe zugrunde, hier Abhilfe zu schaffen und eine Ankermutter für Schalungsanker von Betonschalungen vorzuschlagen, welche auch bei hohen auf den Schalungsanker einwirkenden Kräften ohne die Gefahr von Beschädigungen mit normalem Werkzeug bzw. mit normalem Kraftaufwand und schnell gelöst werden kann.

Diese Aufgabe wird erfindungsgemäß dadurch gelöst, daß zwischen der Ankerplatte und der gegenüber dieser verdrehbaren Mutter eine druck- und gleitfähige Zwischenlage vorgesehen ist. Zur Verringerung der Reibungskräfte zwischen Mutter und Ankerplatte und somit zur Schonung des Materials dieser Teile werden erfindungsgemäß die einander gegenüberliegenden Reibungsflächen derselben mit einem gleitfähigen Material versehen, das die durch die Ankerlast bedingten Druckkräfte aufnehmen bzw. übertragen kann. Somit läßt sich die Mutter auch unter voller Ankerlast schnell und mit dem dafür vorgesehenen normalen Werkzeug lösen, so daß sich das Ausschalen beschleunigen läßt und die Ankermuttern auch nach vielfachem Gebrauch noch voll einsatzfähig sind , da sie keinem unmäßigen Verschleiß unterliegen.

Als für diese Zwecke besonders vorteilhaftes Material hat sich Polytetrafluorethylen (PTFE) erwiesen.

Für die praktische Ausführung der Erfindung können die einander gegenüberliegenden und somit aufeinander gleitenden Flächen der Ankerplatte und der Mutter mit einer gleitfähigen Beschichtung, vorzugsweise aus PTFE versehen sein, wobei es unter Umständen auch ausreicht, wenn nur eine der beiden Flächen mit einer derartigen Beschichtung versehen ist. Gemäß einer anderen praktischen Ausführungsform der Erfindung wird zwischen Ankerplatte und Mutter eine aus Stahl bestehende Unterlegscheibe eingelegt, die beidseitig oder unter Umständen auch nur einseitig mit einer Beschichtung aus PTFE versehen ist. Schließlich ist es auch möglich, zwischen Ankerplatte und Mutter eine Ringscheibe einzulegen, die vollständig aus PTFE besteht.

Bei allen Ausführungsformen ist es zweckmäßig, die Druckfläche der Mutter und/oder der Ankerplatte und/oder der eingelegten Scheiben ballig auszubilden, um die Funktionsfähigkeit der Ankermutter auch bei einer gewissen Neigung bzw. Schrägstellung der Ankerstäbe zu gewährleisten.

Durch die Erfindung ist es mit einfachen und wirkungsvollen Mitteln möglich, Ankermuttern für Betonschalungen den heutzutage üblichen und immer höher werdenden Betonierdrücken anzupassen, ohne deren Abmessungen für eine leichtere Ausbaubarkeit vergrößern zu müssen.

In der Zeichnung sind zwei Ausführungsbeispiele einer erfindungsgemäßen Ankermutter dargestellt , und zwar zeigt

Fig. 1 eine teilweise geschnittene Seitenansicht einer Ausführungsform der Ankermutter und

Fig. 2 eine ähnliche Ansicht einer zweiten Ausführungsform der Ankermutter.

Die Ankermutter (1) hat bei beiden Ausführungsbeispielen eine räumlich gestaltete Ankerplatte (2) und eine unverlierbar mit dieser verbundene, ihr gegenüber jedoch verdrehbare Mutter (3) mit Sechskantkopf (4), an den ein Stellwerkzeug angesetzt werden kann, und mit Anschlagnasen (5) zur Bedienung mit einem Hammer. Die Mutter (3) ist mit Innengewinde (6) zum Aufschrauben auf einen nicht dargestellten stabförmigen Schalungsanker versehen.

Am inneren Ende der Mutter (3) befindet sich ein rohrförmiger Ansatz (7), der durch eine im Durchmesser größere Öffnung (8) im hochstehenden Mittelteil (g) der Ankerplatte (2) ragt. Innerhalb der Ankerplatte (2) sitzt auf dem rohrförmigen Ansatz (7) eine Unterlegscheibe (10) , die von dem nach Anbringen der Mutter (3) an der Ankerplatte (2) aufgeweiteten Ende (11) des rohrförmigen Ansatzes (6) derart gehalten ist, daß eine Drehbarkeit der Teile gegeneinander und eine gewisse Schrägstellung oder Neigbarkeit bei - schrägsitzenden Ankerstäben gewährleistet ist.

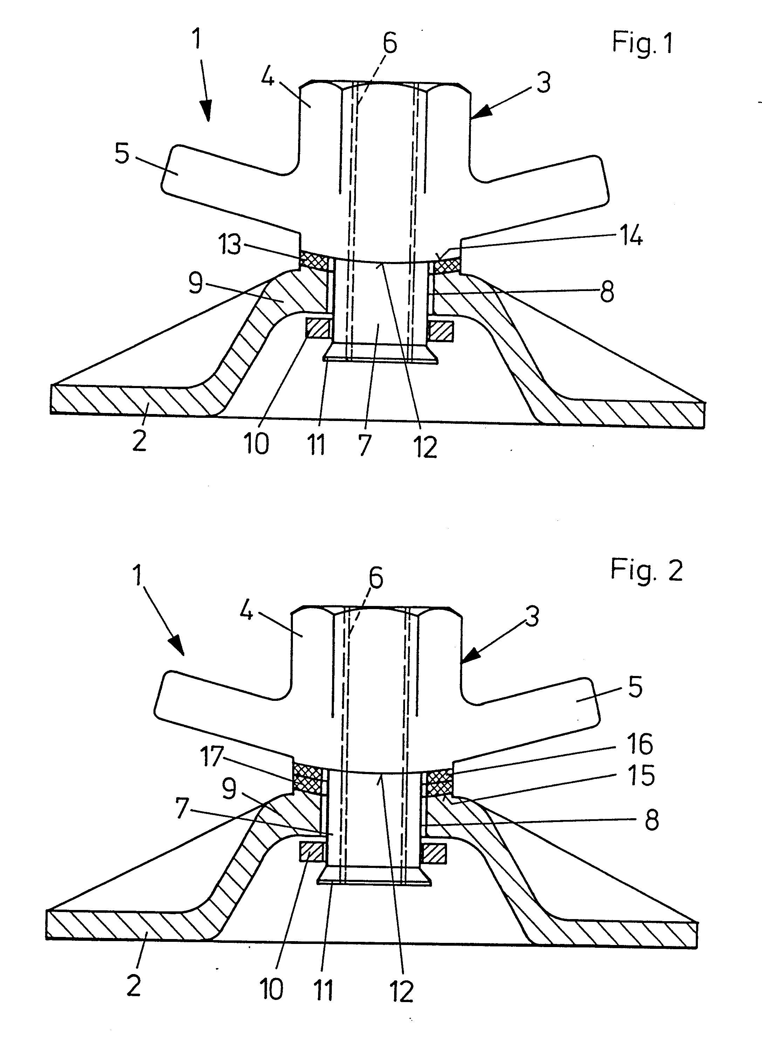

Zwischen der ebenen Oberseite des Mittelteiles (9) der Ankerplatte (2) und der balligen Rückseite (12) der Mutter (3) ist bei der Ausführungsform aus Fig. 1 auf dem rohrförmigen Ansatz (7) eine Druckscheibe (13) aus Polytetraflourethylen (PTFE) angeordnet, die eine der balligen Rückseite (12) der Mutter (3) entsprechende ballig vertiefte Oberseite (14) aufweist. Somit liegt die aus gleitfähigem Material bestehende und hohe Drücke aushaltende Scheibe (13) vollflächig sowohl auf der ebenen Außenseite des Mittelteiles (9) der Ankerplatte (2) auf als auch an der balligen Rückseite (12) der Mutter (3) an. Dadurch ist die Übertragung hoher Drücke gewährleistet, wobei jedoch zum Lösen der Mutter (3) auch unter voller Ankerlast keine übermäßig hohen Kräfte erforderlich sind.

Bei der Ausführungsform gemäß Fig. 2 ist die Oberseite (15) des Mittelteiles (9) der Ankerplatte (2) ballig vertieft. Auf dem rohrförmigen Ansatz (7) der Mutter (3) sind zwei Unterlegscheiben (16,17) angeordnet, die bei dieser Ausführungsform ballig gewölbt sind, aus gehärtetem Stahl bestehen und blanke bzw. glatte Oberflächen aufweisen. Daher ist der Reibwert zwischen diesen Unterlegscheiben bzw. an denselben verhältnismäßig gering, so daß die Mutter (3) auch unter voller Last problemlos und leicht gelöst werden kann.

## Ansprüche

1. Ankermutter für Schalungsanker von Betonschalungen, mit einer auf den Schalungsanker aufsteckbaren Ankerplatte und mit einer auf den Schalungsanker aufschraubbaren Mutter, die relativ zur Ankerplatte verdrehbar ist, **dadurch gekennzeichnet,** daß zwischen der Ankerplatte (2) und der Mutter (3) eine druck-und gleitfähige Zwischenlage (13) vorgesehen ist.

2. Vorrichtung nach Anspruch 1, dadurch gekennzeichnet, daß zwischen der Ankerplatte (2) und der Mutter (3) wenigstens eine druckfähige Scheibe (13) mit gleitfähiger Oberfläche angeordnet ist.

3. Vorrichtung nach Anspruch 2, dadurch gekennzeichnet, daß die druckfähige Scheibe (13) aus Stahl besteht und wenigstens auf einer Seite eine Beschichtung aus gleitfähigem Kunststoff wie Polytetrafluorethylen (PTFE) aufweist.

4. Vorrichtung nach Anspruch 2, dadurch gekennzeichnet, daß die druckfähige Scheibe (13) aus gleitfähigem Kunststoff wie Polytetrafluorethylen (PTFE) besteht.

5. Vorrichtung nach Anspruch 1, dadurch gekennzeichnet, daß die Kontaktfläche (9;12) der Ankerplatte (2) und/oder der Mutter (3) mit einem Überzug bzw. einer Besichtung aus Polytetrafluorethylen (PTFE) versehen sind.

6. Vorrichtung nach Anspruch 1 oder 2, dadurch gekennzeichnet, daß zwischen der Ankerplatte (2) und der Mutter (3) wenigstens eine Unterlegescheibe (16;17) aus gehärtetem Stahl mit glatter Oberfläche angeordnet ist.

7. Vorrichtung nach Anspruch 6, dadurch gekennzeichnet, daß zwischen der Ankerplatte (2) und der Mutter (3) zwei glatte Oberflächen aufweisende Unterlegscheiben (16,17) aus gehärtetem Stahl angeordnet sind.

8. Vorrichtung nach einem der Ansprüche 1 bis 4, 6 und 7 , dadurch gekennzeichnet, daß zwischen der Ankerplatte (2) und der Mutter (3) wenigstens eine ballige oder sphärische Kontaktfläche (12;15) vorgesehen ist.

9. Vorrichtung nach Anspruch 8, dadurch gekennzeichnet, daß wenigstens die Ankermutter (3) eine ballig oder sphärisch gewölbte Unterseite (12) aufweist und die druckfähigen Scheiben (13; 16,17) entsprechend ballig ausgebildet sind.

Fig. 1

Fig. 2